# EUROPÄISCHE PATENTANMELDUNG

(11) **EP 0 648 044 A1**
(43) Veröffentlichungstag der Anmeldung: **12.04.1995**
(21) Anmeldenummer: 94115778.6
(22) Anmeldetag: 06.10.1994
(51) Int. Cl.: H04N 5/225

(54) **Videokamera mit Reinigungsvorrichtung**

(30) Priorität: 06.10.1993 DE 4334016
(71) Anmelder: Dornier, Irén, E-28023 Madrid (La Florida) (ES)
(72) Erfinder: Dornier, Irén, E-28023 Madrid (La Florida) (ES)
(74) Vertreter: Flosdorff, Jürgen, Dr.

(57) **Zusammenfassung**

Es wird vorgeschlagen, die Linse (35) einer Videokamera (36) mit einer Klarsichtfolie (37) zu überdecken, die von einer Zuführspule (38) abziehbar und auf eine Aufwickelspule (39) aufnehmbar ist. Die Aufwickelspule ist mit einem elektrischen Schrittmotor verbunden, der auf ein Signal hin die Folie in einem Arbeitstakt wenigstens um eine solche Länge vorrückt, die dem Durchmesser der Linse entspricht. Die Klarsichtfolie gewährleistet, daß sich auf der Linse keinerlei Schmutzpartikel ablagern können, so daß die Videokamera stets einwandfreie Bilder liefert. Die Videokamera kann in Kraftfahrzeugen eingesetzt werden, um die rückwärtige Verkehrssituation zu überwachen und auf einem Monitor anzuzeigen.

## Beschreibung

Eine Videokamera kann nur so lange einwandfreie Bilder liefern, wie ihre Linse sauber ist. Wenn die Linse mit Schmutzpartikeln bedeckt oder beispielsweise beschlagen ist, muß sie zur Herstellung einer einwandfreien Funktionsweise der Videokamera gereinigt werden.

Der vorliegenden Erfindung liegt die Aufgabe zugrunde, eine Einrichtung anzugeben, mit der die Linse einer Videokamera stets in einem einwandfreien Zustand gehalten wird.

Dies wird erfindungsgemäß dadurch erreicht, daß die Linse der Videokamera von einer streifenförmigen Klarsichtfolie überdeckt ist, die auch ein UV-Filter oder ein Farbfilter sein kann und die mittels einer Antriebseinrichtung derart vorrückbar ist, daß stets ein neuer, unverschmutzter Abschnitt der Klarsichtfolie die Linse überdeckt. Bevorzugt wird die Klarsichtfolie dabei von einer Zufuhrspule abgezogen und auf eine Aufwickelspule aufgewickelt.

In weiterer Ausgestaltung der Erfindung wird vorgeschlagen, daß die Klarsichtfolie über die Linse gespannt wird und dort mittels einer geeigneten Führung beispielsweise in Führungsschienen so dicht abschließt, daß keine Fremdpartikel zur Linse gelangen können. Zum Spannen der Klarsichtfolie kann diese über eine an geeigneter Stelle angebrachte Spannrolle, die beispielsweise federbeaufschlagt ist, geführt werden.

Die Aufwickelrolle kann antriebsmäßig mit einem Motor verbunden sein, bei dessen Betätigung Folie von der Zuführrolle abgewikkelt und auf die Aufwickelrolle aufgewickelt wird. Das Spannen der Folie kann dabei auch dadurch bewerkstellig werden, daß die Zuführrolle entgegen der Abwickelrichtung von einer Feder vorgespannt wird.

Der Motor, mit dem zweckmäßigerweise die Aufwickelrolle verbunden ist, kann ein Schrittmotor sein, der in einem Arbeitstakt die Folie um eine den Abmessungen der Linse entsprechende Länge vorrückt. Der vorzugsweise kleine Elektromotor kann beispielsweise durch Knopfdruck der Bedienungsperson der Videokamera betätigt werden. Es liegt aber auch im Rahmen der Erfindung, daß das Vorspulen der Folie durch einen handbetätigten Mechanismus erfolgen kann.

Die Aufwickel- und Abwickelspule sind an geeigneter Stelle in dem Gehäuse der Videokamera untergebracht, in einer Ausführungsform im bezüglich der Linse rückwärtigen Gehäuseteil. Es kann aber auch vorgesehen sein, daß das Gehäuse der Videokamera im Bereich der Linse so verbreitert ist, daß zu beiden Seiten der Linsenanordnung die beiden Spulen Platz finden. In weiterer Ausgestaltung des Erfindungsgedankens wird vorgeschlagen, daß die Folie zunächst in einem auf eine Zufuhrrolle aufgewickelten Zustand in das Gehäuse eingesetzt, über den Bereich der Linse geführt und an einer Aufwickelrolle befestigt wird, etwa in der Art, wie ein lichtempfindlicher Film in einen Photoapparat eingesetzt wird.

Die die vorrückbare Klarsichtfolie enthaltende Schutzeinrichtung ist insbesondere für Videokameras geeignet, die zu solchen Zwecken eingesetzt werden, bei denen die Linse verschmutzt werden oder beschlagen kann oder durch andere äußere Einflüsse beeinträchtigt wird, oder auch für solche Videokameras, die beispielsweise in großer Höhe an Gebäuden zu Überwachungszwecken angebracht werden und bei denen es schwierig ist, die Linse zu reinigen, beispielsweise von Staub zu befreien.

In diesem Zusammenhang wird vorgeschlagen, die Videokamera mit der erfindungsgemäßen Schutzeinrichtung rückwärts gewandt in Kraftfahrzeugen einzusetzen, um anstelle von Rückspiegeln oder zusätzlich zu den Rückspiegeln den rückwärtigen Raum hinter dem Fahrzeug besser zu überblicken. Hierzu wird weiter vorgeschlagen, wenigstens eine, vorzugsweise drei solcher Videokameras am Heck des Fahrzeugs zu befestigen und mit einem im Fahrzeug befindlichen Monitor zu verbinden.

Die wenigstens eine Videokamera bietet einen vollständigen Überblick über die rückwärtige Verkehrssituation und räumlichen Verhältnisse, so daß der bisher bei Außenspiegeln vorhandene tote Winkel, in dem ein anderes Fahrzeug unbemerkt bleiben kann, ausgeschaltet wird. Die Videokamera kann zudem erfindungsgemäß mit einer Auswerte- und Anzeigeeinrichtung verbunden sein, die beim Aufenthalt anderer Fahrzeuge in einem festzulegenden, kritischen Bereich und beim Herannahen von Fahrzeugen mit großer Geschwindigkeit ein Warnsignal abgibt, welches akustisch und/oder optisch im Monitor die Gefahrensituation anzeigt. Es versteht sich, daß auch das rückwärtigen Einparken eines mit einem solchen "Videospiegel" ausgerüsteten Kraftfahrzeugs erheblich vereinfacht ist. Die Videokameras liefern stets einwandfreie Bilder, da ihre Linse von der Klarsichtfolie in einem einwandfreien Zustand gehalten wird.

Weitere Einzelheiten der Erfindung ergeben sich aus der nachfolgenden Beschreibung bevorzugter Ausführungsformen der Videokamera. Dabei zeigen auf rein schematische Weise:
- Fig. 1: eine erste Ausführungsform einer Videokamera mit Schutzeinrichtung für die Linse einer Videokamera und
- Fig. 2: eine weitere Ausführungsform einer Videokamera, deren Hauptbestandteile in einem rückwärtigen Teil des Gehäuses untergebracht sind.

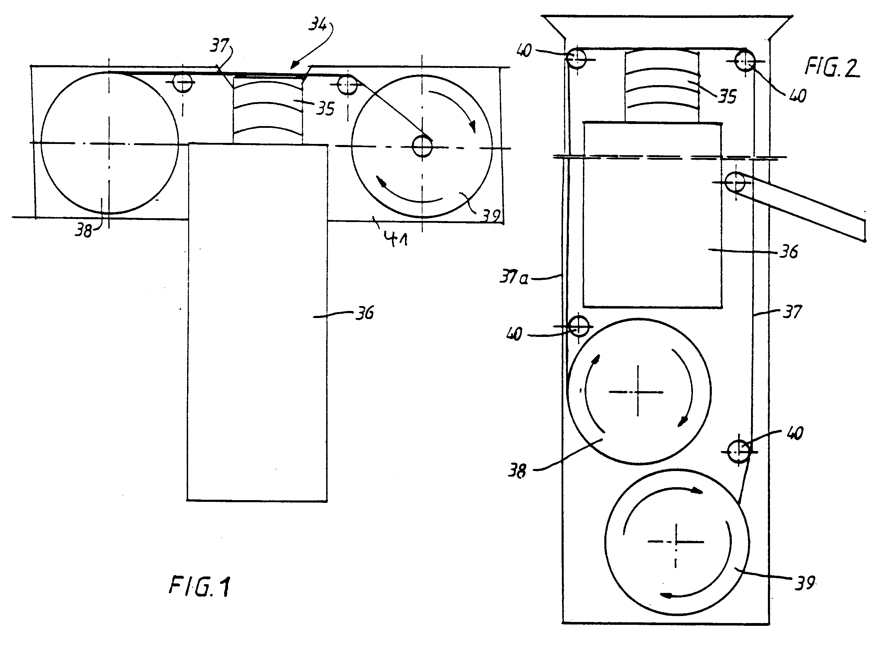

Fig. 1 zeigt das Prinzip der von einer Vorratsrolle abgezogenen und auf eine Aufwickelrolle aufgewickelten Klarsichtfolie bei einer Schutzeinrichtung 34 für die Linse 35 einer Videokamera 36. Hierbei wird eine klare Folie 37, die über eine ausreichende Zug- und Reißfestigkeit verfügt, von einer Vorratsspule 38 abgezogen und dabei auf eine motorgetriebene Aufwickelspule 39 aufgewickelt. Die Folie 37 ist dabei an ihren Rändern so in Führungsschienen geführt, daß keine Schmutzpartikel zur Linse 35 gelangen können.

Die Vorratsspule 38 und die Aufwickelspule 39 sind in einem Gehäuseteil 41 untergebracht, der in der Fig. 1 nur rein schematisch dargestellt ist. Die beiden Spulen 38 und 39 befinden sich dabei seitlich neben dem Bereich der Linse 35. Die Klarsichtfolie 37 kann auf einer Vorratsspule 38 in etwa so in den Gehäuseabschnitt 41 eingesetzt werden, wie dies bei einem lichtempfindlichen Film eines Photoapparats der Fall ist.

Bei der in Fig. 8 schematisch dargestellten Ausführungsform befinden sich die Vorratsspule 38 und die Aufwickelspule 39 in einem bezüglich der Linse 35 rückwärtigen Teil des Gehäuses 37a der Videokamera. Die Klarsichtfolie 37 ist dabei über mehrere Umlenkrollen 40 geführt, unter denen auch eine oder mehrere Spannrollen sein können, um die Folie ausreichend gespannt zu halten. Auch bei dieser Ausführungsform ist die Folie im Bereich der Linse so geführt, daß keine Schmutzpartikel, Staub oder dergleichen auf die Linse gelangen können.

## Patentansprüche

1. Videokamera,
**dadurch gekennzeichnet**,
daß sie eine Schutzeinrichtung (34) für die Linse (35) enthält.

2. Videokamera nach Anspruch 1,
dadurch gekennzeichnet, daß die Linse (35) der Videokamera (36) von einer Folie (37) überdeckt ist, die von einer Zuführspule (38) abziehbar und auf eine Aufwickelspule (39) aufwickelbar ist.

3. Videokamera nach Anspruch 1 oder 2,
dadurch gekennzeichnet, daß die Folie eine Klarsichtfolie (37) ist.

4. Videokamera nach Anspruch 1 oder 2,
dadurch gekennzeichnet, daß die Folie ein UV-Filter ist.

5. Videokamera nach einem der Ansprüche 1 oder 2,
dadurch gekennzeichnet, daß die Folie ein Farbfilter ist.

6. Videokamera nach einem der Ansprüche 1 bis 5,
dadurch gekennzeichnet, daß die Zuführspule (38) und die Aufwickelspule (39) in einem Gehäuseabschnitt (41) zu beiden Seiten der Linse (35) untergebracht sind.

7. Videokamera nach einem der Ansprüche 1 bis 5,
dadurch gekennzeichnet, daß die Zuführspule (38) und die Aufwickelspule (39) in einem bezüglich der Linse (35) hinteren Abschnitt des Gehäuses (37a) der Videokamera untergebracht sind.

8. Videokamera nach einem der Ansprüche 1 bis 7,
dadurch gekennzeichnet, daß die Folie (37) derart über die Linse (35) geführt ist, daß die Linse (37) dicht abgedeckt ist.

9. Videokamera nach einem der Ansprüche 1 bis 8,
dadurch gekennzeichnet, daß die Aufwickelspule (39) mit einem elektrischen Schrittmotor verbunden ist, der in einem Arbeitstakt die Folie (37) wenigstens um eine dem Durchmesser der Linse (35) entsprechende Länge vorrückt.

10. Verwendung einer Videokamera nach einem der Ansprüche 1 bis 9 in einem Kraftfahrzeug zur Sichtbarmachung des rückwärtigen Raums des Kraftfahrzeugs auf einem für den Fahrer sichtbaren Monitor.
